## Europäisches Patentamt
## European Patent Office
## Office européen des brevets

(19)

(11) Veröffentlichungsnummer : **0 099 984**
**B1**

(12) ## EUROPÄISCHE PATENTSCHRIFT

(45) Veröffentlichungstag der Patentschrift :
10.09.86

(21) Anmeldenummer : **83105891.2**

(22) Anmeldetag : **16.06.83**

(51) Int. Cl.⁴ : **C 08 G 73/06**

(54) Elektrisch leitfähige Copolymere von Pyrrolen sowie Verfahren zu ihrer Herstellung.

(30) Priorität : 24.06.82 DE 3223544

(43) Veröffentlichungstag der Anmeldung :
08.02.84 Patentblatt 84/06

(45) Bekanntmachung des Hinweises auf die Patenterteilung : 10.09.86 Patentblatt 86/37

(84) Benannte Vertragsstaaten :
BE DE FR GB NL

(56) Entgegenhaltungen :
CHEMICAL ABSTRACTS, Band 77, 1972, Seite 2, Nr. 114913v, Columbus, Ohio, USA IV. SHOPOV et al.: "Polypyrroleindophenines"

(73) Patentinhaber : BASF Aktiengesellschaft
Carl-Bosch-Strasse 38
D-6700 Ludwigshafen (DE)

(72) Erfinder : Naarmann, Herbert, Dr.
Haardtblick 15
D-6719 Wattenheim (DE)
Erfinder : Simak, Petr, Dr.
Philipp-Scheidemann-Strasse 17
D-6700 Ludwigshafen (DE)
Erfinder : Koehler, Gernot, Dr.
Berner Weg 32
D-6700 Ludwigshafen (DE)

**Beschreibung**

Die Erfindung betrifft elektrisch leitfähige Copolymere aus Pyrrolen und anderen heteroaromatischen Verbindungen sowie ihre Herstellung durch anodische Copolymerisation der Pyrrole und der anderen heteroaromatischen Verbindungen in Gegenwart von Leitsalzen. Die so erhaltenen erfindungsgemäßen Copolymere sind — im allgemeinen filmförmige — Materialien, die eine hohe elektrische Leitfähigkeit, ein hohes mechanisches Niveau und vorteilhafte anwendungstechnische Eigenschaften besitzen.

In der US-Patentschrift 3 574 072 wird die elektrochemische Polymerisation von 5- und 6-Ring-Heterocyclen, u. a. von Pyrrol, beschrieben ; über die elektrische Leitfähigkeit und die Verarbeitbarkeit der erhaltenen Materialien werden keine näheren Angaben gemacht. Ebenso findet sich in dieser Patentschrift kein Hinweis auf die Copolymerisation der Heterocyclen und die Eigenschaften hieraus hergestellter Copolymerisate.

Aus Arbeiten von A.F. Diaz et al, J.C.S. Chem. Comm. 1979, Seite 635 ; J.C.S. Chem. Comm. 1979, Seite 854 ; ACS Org. Coat. Plast. Chem. 43 (1980) wurde bekannt, daß durch anodische Polymerisation von Pyrrol in Gegenwart von Leitsalzen Filme mit elektrischen Leitfähigkeiten bis zu $10^2 \ \Omega^{-1} \ cm^{-1}$ gebildet werden. Hierbei handelt es sich um p-leitende Polypyrrole, wobei als Gegenionen vor allem $BF_4^-$, $AsF_6^-$, $ClO_4^-$ und $HSO_4^-$ genannt werden. Die mechanischen Eigenschaften der so hergestellten Filme sind jedoch bei weitem noch nicht zufriedenstellend.

Gemäß der EP-A-55 358 können durch anodische Polymerisation von Pyrrolen in Gegenwart von Salzen saurer Nitroaromaten als Leitsalzen elektrisch leitfähige Polypyrrol-Komplexe mit Nitroaromat-Anionen hergestellt werden, die im Vergleich zu den vorbekannten elektrisch leitfähigen Polypyrrolen ein erheblich höheres mechanisches Niveau aufweisen. Doch auch diese Polypyrrol-Komplexe mit Nitroaromat-Anionen sind für spezielle Anwendungszwecke noch verbesserungsbedürftig.

Aufgabe der vorliegenden Erfindung ist es, weitere, neue Copolymere von Pyrrolen zu schaffen, die gleichzeitig eine hohe elektrische Leitfähigkeit und ein hohes mechanisches Niveau besitzen und die gegenüber den bekannten elektrisch leitfähigen Polypyrrol-Systemen ein verbessertes Eigenschaftsbild aufweisen. Aufgabe der Erfindung ist es weiterhin, einfache und vorteilhafte Verfahren zur Herstellung solcher Polymeren aufzuzeigen.

Es wurde nun überraschend gefunden, daß diese Aufgabe gelöst wird, wenn man Pyrrole und andere Heterocyclen mit einem konjugierten π-Elektronensystem durch anodische Oxidation in Gegenwart von Leitsalzen zu Copolymeren umsetzt, wobei man zu besonders vorteilhaften Produkten kommt, wenn man von Di- oder Oligomeren, auch cyclischen Oligomeren, der 5-Ring- oder 6-Ring-Heteroaromaten ausgeht.

Gegenstand der Erfindung sind demzufolge elektrisch leitfähige Copolymere von Pyrrolen, die neben den Einheiten aus Pyrrolen Comonomer-Einheiten aus anderen 5- und/oder 6-gliedrigen Heterocyclen mit einem konjugierten π-Elektronensystem eingebaut enthalten, und Gegenanionen.

Gegenstand der Erfindung ist weiterhin ein Verfahren zur Herstellung dieser Copolymeren, welches dadurch gekennzeichnet ist, daß man Pyrrole und andere Heterocyclen, die ein konjugiertes π-Elektronensystem besitzen, bzw. deren Di- oder Oligomeren durch anodische Oxidation in einem polaren Lösungsmittel in Gegenwart von Leitsalzen copolymerisiert. Gegenstand der Erfindung sind des weiteren spezielle Ausgestaltungsformen der Copolymeren sowie des Verfahrens zu ihrer Herstellung gemäß der nachfolgenden detaillierten Beschreibung und den beigefügten Ansprüchen.

Bei den erfindungsgemäßen, durch anodische Polymerisation hergestellten Copolymeren handelt es sich um elektrisch hochleitfähige Systeme, die zumindest teilweise das Anion des bei ihrer Herstellung verwendeten Leitsalzes enthalten. Man kann die erfindungsgemäßen Copolymeren daher auch als Komplexe aus Kationen der Copolymere der Pyrrole und anderen Heterocyclen und Gegenanionen bezeichnen. Die Copolymere der Erfindung besitzen darüber hinaus ein hohes mechanisches Niveau und ein insgesamt ausgewogenes und verbessertes Eigenschaftsbild, insbesondere auch sehr gute anwendungstechnische Eigenschaften, was sie für den Einsatz in einem sehr breiten Anwendungsgebiet geeignet macht.

Unter Pyrrolen werden im Rahmen dieser Erfindung das unsubstituierte Pyrrol selber als auch die substituierten Pyrrole, wie die N-Alkylpyrrole, N-Arylpyrrole, die an den C-Atomen monoalkyl- oder dialkylsubstituierten Pyrrole und die an den C-Atomen monohalogen- oder dihalogensubstituierten Pyrrole verstanden. Bei der Herstellung der erfindungsgemäßen Copolymere können die Pyrrole allein oder in Mischung miteinander eingesetzt werden, so daß die Copolymere ein oder mehrere verschiedene Pyrrole eingebaut enthalten können. Vorzugsweise leiten sich die wiederkehrenden Pyrrol-Einheiten in den Copolymeren im wesentlichen vom unsubstituierten Pyrrol selber ab. Werden substituierte Pyrrole bei der Herstellung eingesetzt, sind hierfür die 3,4-Dialkylpyrrole, insbesondere solche mit 1 bis 4 C-Atomen im Alkylrest, wie 3,4-Dimethylpyrrol und 3,4-Diethylpyrrol, wie auch die 3,4-Dihalogenpyrrole, insbesondere 3,4-Dichlorpyrrol, bevorzugt.

Die anderen Heterocyclen mit einem konjugierten π-Elektronensystem, die erfindungsgemäß als Comonomere einzusetzen bzw. in den Copolymeren enthalten sind, sind heteroaromatische Verbindungen und werden im Rahmen dieser Erfindung der Einfachheit halber auch lediglich als « Heterocyclen » oder « die anderen Heterocyclen » bezeichnet. Es handelt sich bei diesen Heterocyclen um 5- oder 6-gliedrige Ringsysteme, vorzugsweise mit einem oder mehreren, vorzugsweise einem bis drei und insbesondere einem oder zwei Heteroatomen, die ggf., beispielsweise durch Alkylgruppen, am Heteroatom oder an den Ring-Kohlenstoffatomen substituiert sein können. Bei den Heterocyclen sollen dabei vorzugsweise, ebenso wie bei den Pyrrolen, mindestens zwei Ring-Kohlenstoffatome nicht substituiert sein, um die anodische Oxidation einfach und gut durchführen zu können. Beispiele für gut geeignete Heterocyclen sind Furan, Thiophen, Thiazol, Oxazol, Thiadiazol, Imidazol, Pyridin, 3,5-Dimethylpyridin, Pyrimidin, Pyrazin, 3,5-Dimethylpyrazin. Besonders bewährt haben sich die 5-gliedrigen Heterocyclen, wie Furan, Thiophen, Thiazol und Thiadiazol. Die Heterocyclen können allein oder in Mischung miteinander zum Einsatz kommen.

Als besonders vorteilhaft hat es sich erwiesen, wenn man bei der Herstellung der erfindungsgemäßen Copolymere von Di- oder Oligomeren der Pyrrole und/oder der anderen heterocyclen ausgeht oder zumindest solche Di- oder Oligomeren mitverwendet. Bei den Oligomeren kann es sich auch um cyclische Oligomerisierungsprodukte handeln. Vorzugsweise werden die di- oder oligomeren Heterocyclen, insbesondere Di- oder Oligomere des Thiophens oder Furans, aber auch die des Pyridins oder Pyrimidins eingesetzt. Beispiele hierfür sind cyclische Tetrathienyle, Hexathienyle, Cyclooctatetrafurane, Cyclooctatetrathionaphthene, Cyclooctatetrapyrimidine und Bipyrimidine, wie sie entsprechend Chem. Ber. *111*, 1330-1336 (1978) hergestellt werden können, sowie Di- und Oligomere vom Typ des Bifurans, Terfurans, Quaterfurans oder Octifurans, wie sie gemäß Chem. Berichte *114*, 3667-3673 (1981) erhalten werden können. Ferner können auch Trimere oder andere Oligomere von Pyrrol oder N-Alkylpyrrolen Einsatz finden, die entsprechend J. Chem. Soc. 4018-4022 (1957) und Chem. Berichte *114*, 3674-3683 (1981) erhältlich sind. Zur Herstellung der erfindungsgemäßen Copolymere kann allein von di- oder oligomeren Heterocyclen ausgegangen werden, die Di- oder Oligomeren können aber auch zusammen mit monomeren Heterocyclen eingesetzt werden.

Bei den erfindungsgemäßen Copolymeren, die unter Mitverwendung von di- oder oligomeren Heterocyclen hergestellt worden sind, handelt es sich im Vergleich zu den Copolymeren, die nur aus monomeren Pyrrolen und monomeren anderen Heterocyclen erhalten worden sind, um Produkte mit Kristallinität, die u.a. eine weiter verbesserte Reißfestigkeit und Elektrolytbeständigkeit bei einem gleichmäßigen, homogenen Filmaufbau ohne Oberflächenrauhigkeit zeigen.

Die erfindungsgemäßen Copolymeren enthalten neben Einheiten aus Pyrrolen wiederkehrende Einheiten aus einem oder mehreren der anderen Heterocyclen eingebaut. In den Copolymeren kann das Gewichtsverhältnis von den Einheiten aus Pyrrolen zu den Einheiten aus den anderen Heterocyclen in weiten Grenzen schwanken, z. B. von 1 : 99 bis 99 : 1. Vorzugsweise beträgt das Gewichtsverhältnis dieser Einheiten in den erfindungsgemäßen Copolymeren 20 : 80 bis 90 : 10.

Zur Herstellung der Copolymeren werden die Monomeren, das sind die Pyrrole und die anderen Heterocyclen bzw. deren Di- oder Oligomeren in einem polaren Lösungsmittel in Gegenwart eines geeigneten Leitsalzes anodisch oxidiert und dabei polymerisiert. Die Gesamtmonomer-Konzentration beträgt hierbei im allgemeinen etwa 0,1 Mol pro Liter Lösungsmittel. Da die Elektrolyse meist nur bis zu kleinen Umsätzen durchgeführt wird, kann diese Konzentration in weiten Grenzen unterschritten, aber auch überschritten werden.

Als Leitsalze dienen bevorzugt ionische oder ionisierbare Verbindungen mit Anionen starker, oxidierender Säuren oder auch von gegebenenfalls mit Nitro-Gruppen substituierten Aromaten mit sauren Gruppen. Als Kationen für diese Leitsalze kommen neben den Erdalkalimetall-Kationen und $H^+$ insbesondere die Alkalimetall-Kationen, vorzugsweise $Li^+$, $Na^+$ oder $K^+$, in Betracht. Sehr günstig sind auch die $NO^+$- und $NO_2^+$-Kationen sowie insbesondere die Onium-Kationen, vor allem des Stickstoffs und des Phosphors, etwa des Typs $R_4N^+$ und $R_4P^+$, worin die Reste R unabhängig voneinander Wasserstoff, niedere Alkylreste, vorzugsweise mit 1 bis 6 C-Atomen, cycloaliphatische Reste, vorzugsweise mit 6 bis 14 C-Atomen, oder aromatische Reste, vorzugsweise mit 6 bis 14 C-Atomen, bedeuten. Unter den Ammonium- und Phosphonium-Kationen sind die tertiären und quaternären mit Alkylresten mit 1 bis 4 C-Atomen besonders bevorzugt. Beispielhaft für bevorzugte Onium-Kationen seien neben dem $NH_4^+$-Ion insbesondere das Tetramethylammonium-, das Tetraethylammonium-, das Tetra-n-butylammonium-, das Triphenylphosphonium- und das Tri-n-butylphosphonium-Kation genannt.

Als Anionen für das Leitsalz haben sich $BF_4^-$, $AsF_4^-$, $AsF_6^-$, $SbF_6^-$, $SbCl_6^-$, $PF_6^-$, $ClO_4^-$, $HSO_4^-$ und $SO_4^{2-}$ als günstig erwiesen. Eine weitere Gruppe von Leitsalzen, die bei der Herstellung der erfindungsgemäßen Copolymere mit besonderem Vorteil eingesetzt werden, leitet sich von Aromaten mit sauren Gruppen ab. Hierzu gehören Salze von aromatischen Carbonsäuren, wie z. B. das $C_6H_5COO^-$-Anion sowie insbesondere die Anionen von gegebenenfalls mit Alkylgruppen substituierten aromatischen Sulfonsäuren. In einer anderen sehr günstigen Ausführungsform können die aromatischen Kerne der sauren Aromaten neben den sauren Gruppen auch noch andere Substituenten, insbesondere Nitro-Gruppen tragen. Zu den sauren Nitroaromaten zählen z. B. die Nitrophenole, die Nitrogruppen-substituierten aromatischen Carbonsäuren und die Nitrogruppen-substituierten aromatischen Sulfonsäuren. Insbesondere finden die Salze von Nitro-, Dinitro-, Trinitrophenolen, Nitro-, Dinitro-, Trinitro-Benzoesäuren sowie Nitro-, Dinitro- und Trinitro-Benzolsulfonsäuren Einsatz. Auch sind die Salze von Nitroaromaten mit mehreren sauren Gruppen, wie phenolischen Hydroxylgruppen, Carboxylgruppen und Sulfonsäuregruppen, geeignet. Ferner können saure Aromaten mit Nitrosogruppen eingesetzt werden. Wegen der damit erzielbaren guten Ergebnisse sind Leitsalze mit dem Benzolsulfonsäure-Anion $C_6H_5SO_3^-$ ganz besonders bevorzugt.

Die Leitsalzkonzentration beträgt in dem erfindungsgemäßen Verfahren im allgemeinen 0,001 bis 1, vorzugsweise 0,01 bis 0,1 Mol/Liter Elektrolytlösungsmittel.

Das erfindungsgemäße Verfahren wird in polaren, vorzugsweise organischen und insbesondere aprotischen Lösungsmitteln, die die Monomeren und das Leitsalz zu lösen vermögen, durchgeführt. Wenn mit Wasser mischbare organische Lösungsmittel Einsatz finden, kann zur Erhöhung der elektrischen Leitfähigkeit eine geringe Menge an Wasser, im allgemeinen bis zu 3 Gew.%, bezogen auf das organische Lösungsmittel, zugesetzt werden, auch wenn in diesen Fällen in der Regel in einem wasserfreien System und insbesondere auch ohne Zusatz von alkalisch machenden Verbindungen gearbeitet wird. Bevorzugte organische Elektrolyt-Lösungsmittel sind z. B. Alkohole, Ether wie 1,2-Dimethoxyethan, Dioxan, Tetrahydrofuran und Methyltetrahydrofuran, Aceton, Acetonitril, Dimethylformamid, Dimethylsulfoxid, Methylenchlorid, N-Methylpyrrolidon oder Propylencarbonat.

Zur Herstellung der erfindungsgemäßen Copolymeren aus den Pyrrolen und den anderen Heterocyclen wird bevorzugt in einer einfachen, üblichen elektrolytischen Zelle oder Elektrolyse-Apparatur, bestehend aus einer Zelle ohne Diaphragma, 2 Elektroden und einer externen Stromquelle, gearbeitet. Die Elektroden können dabei beispielsweise aus Graphit sein ; im allgemeinen werden jedoch Nickel-, Titan- oder Edelmetallelektroden, bevorzugt Platinelektroden, verwendet. Dabei ist es günstig, wenn zumindest die Anode, insbesondere aber beide Elektroden, flächig ausgebildet sind. In einer besonderen Ausgestaltungsform des erfindungsgemäßen Verfahrens kann die Anode auch aus einem elektrisch leitfähigen Polymeren gebildet werden, wie z. B. aus durch anodische Oxidation hergestelltem Polypyrrol, dotiertem, p-leitendem Polyacetylen oder dotiertem, p-leitendem Polyphenylen. In diesem Fall werden die Pyrrole und die anderen Heterocyclen und/oder deren Di- oder Oligomeren auf die im allgemeinen filmförmigen, elektrisch leitenden Polymeren aufpolymerisiert.

Je nach Verfahrensführung können unterschiedliche Typen von Copolymeren erhalten werden. Setzt man z. B. Edelmetall-Elektroden und eine Mischung aus Pyrrolen und den anderen Heterocyclen ein, wobei hierunter, wie auch im folgenden, auch die entsprechenden Di- und Oligomere mit verstanden werden und mit eingeschlossen sind, so erhält man ein filmförmiges Polymer, welches die Monomer-Einheiten in statistischer Verteilung eingebaut enthält. Die Pyrrole und die anderen Heterocyclen können aber auch stufenweise, d. h. nacheinander polymerisiert werden. So kann man beispielsweise zunächst nur die Pyrrole und/oder deren Oligomere unter Abscheidung eines entsprechenden Polypyrrol-Films auf der Anode polymerisieren und anschließend durch anodische Oxidation der anderen Heterocyclen diese und/oder deren Oligomere auf das zuvor erzeugte Polypyrrol aufpolymerisieren. Dieser Verfahrensvariante kommt es gleich, wenn man einen vorgefertigten Polypyrrol-Film als Anode einsetzt und dann nur die anderen Heterocyclen auf die Anode aufpolymerisiert. Man erhält so « schichtförmig » aufgebaute Copolymere bzw. Copolymer-Filme mit hoher elektrischer Leitfähigkeit. Diese stufenweise Copolymerisation kann natürlich auch so vorgenommen werden, daß man zuerst die anderen Heterocyclen und dann die Pyrrole polymerisiert oder daß man in mehr als zwei Stufen arbeitet, indem z. B. zuerst Pyrrole, oder andere Heterocyclen, dann andere Heterocyclen oder Pyrrole und schließlich nochmals Pyrrole oder andere Heterocyclen polymerisiert werden.

Auch bei Einsatz von den genannten elektrisch leitfähigen Polymeren als Anodenmaterial können die Pyrrole und die anderen Heterocyclen in Mischung miteinander oder stufenweise nacheinander polymerisiert werden. So entsteht beispielsweise bei Einsatz von dotiertem Polyacetylen als Anodenmaterial und einer Mischung aus Pyrrolen und den anderen Heterocyclen ein elektrisch hochleitfähiger Copolymer-Film mit einer Schicht aus Acetylen-Einheiten und einer hiermit über chemische Bindungen verknüpften Schicht aus den Einheiten der Pyrrole und der anderen Heterocyclen. Bei stufenweiser Copolymerisation der Pyrrole und Heterocyclen resultiert in diesem Fall ein Copolymer-Film mit einer Schicht aus Acetylen-Einheiten, einer Schicht aus Einheiten der Pyrrole und einer Schicht aus Einheiten der anderen Heterocyclen, wobei die einzelnen Schichten durch chemische Bindungen miteinander verknüpft sind. Werden als Anodenmaterial bereits elektrisch leitfähige Polypyrrole oder Polymere der anderen Heterocyclen eingesetzt, so ist es, wie bereits erwähnt, zur Herstellung der erfindungsgemäßen Copolymere hinreichend, wenn nur das jeweils andere Monomere alleine, d. h. die anderen Heterocyclen oder die Pyrrole, in dem erfindungsgemäßen Verfahren eingesetzt werden.

Außer der erwähnten einfachen elektrolytischen Zelle ohne Diaphragma können auch andere Elektrolyseeinrichtungen für das erfindungsgemäße Verfahren Einsatz finden, beispielsweise Zellen mit Diaphragma oder solche mit Referenzelektroden zur exakten Potentialbestimmung. Zur Kontrolle der Schichtstärke der abgeschiedenen Filme ist eine Messung der Strommenge (Amp s) zweckmäßig.

Normalerweise führt man die Elektrolyse bei Raumtemperatur und unter Inertgas durch. Da sich die Reaktionstemperatur bei der erfindungsgemäßen Copolymerisation als unkritisch erwiesen hat, kann die Temperatur jedoch in einem breiten Bereich variiert werden, solange die Erstarrungstemperatur bzw. Siedetemperatur des Elektrolyt-Lösungsmittels nicht unter- bzw. überschritten wird. Im allgemeinen hat sich eine Reaktionstemperatur im Bereich von — 40 bis + 40 °C als sehr vorteilhaft erwiesen.

Als Stromquelle für den Betrieb der elektrolytischen Zelle, in der das erfindungsgemäße Verfahren durchgeführt wird, eignet sich jede Gleichstromquelle, wie z. B. eine Batterie, die eine hinreichend hohe elektrische Spannung liefert. Zweckmäßigerweise liegt die Spannung im Bereich von etwa 1 bis 25 Volt ; als besonders vorteilhaft haben sich Spannungen im Bereich von etwa 2 bis 12 Volt erwiesen. Die Stromdichte liegt üblicherweise im Bereich von 0,05 bis 100 mA/cm², vorzugsweise im Bereich von 0,1 bis 20 mA/cm².

Die während der Elektrolyse anodisch abgeschiedenen erfindungsgemäßen Copolymeren werden zur Entfernung von anhaftendem Leitsalz mit Lösungsmitteln gewaschen und bei Temperaturen von 30 bis 150 °C, vorzugsweise unter Vakuum, getrocknet. Bei Einsatz von Graphit-, Edelmetall- oder ähnlichen Elektroden lassen sich danach die im allgemeinen filmförmig abgeschiedenen Copolymere leicht von der Elektrode ablösen, vor allem wenn Schichtstärken über 50 μm abgeschieden wurden. Werden als Anoden-Material leitfähige, filmförmige Polymere eingesetzt, so werden, wie erwähnt, die erfindungsgemäß eingesetzten Comonomeren auf das polymere Elektrodenmaterial aufpolymerisiert, so daß man in diesem Fall ein Copolymer erhält, in dem das als Anode benutzte Polymere mit eingebaut ist.

Die erfindungsgemäßen Copolymere zeigen hohe elektrische Leitfähigkeiten, im allgemeinen im Bereich von $10^0$ bis $10^2$ $\Omega^{-1}$ cm$^{-1}$ und besitzen ein hohes mechanisches Niveau. Zur Messung der Reißkraft und Reißfestigkeit werden Filme aus den erfindungsgemäßen Copolymeren mit definierter Abmessung (Einspannlänge 25 mm, Meßlänge 10 mm, Breite 4 mm) gemäß DIN 53504 auf einer INSTRON 1112-Maschine bis zum Bruch gestreckt. Die Filme erfahren hierbei nur eine unwesentliche Dehnung. Die elektrische Leitfähigkeit in $\Omega^{-1}$ cm$^{-1}$ wird durch Kontaktierung der Filme mit Leitsilber und Messung nach der Zweipunktmethode bestimmt. Identische Ergebnisse erhält man durch Messung nach der Vierpunktmethode, wobei die Übergangswiderstände der Kontaktierung keine Rolle spielen können. Ein Beitrag von Ionenleitung zum Stromfluß konnte nicht festgestellt werden.

Die erfindungsgemäßen Copolymeren haben sehr gute anwendungstechnische Eigenschaften und können zur Herstellung von Elektroden, Katalysatoren, elektrischen Speichersystemen, Batterien, Schaltern, Halbleiter-Bauteilen, Abschirmmaterialien, Solarzellen und zur antistatischen Ausrüstung von Kunststoffen Einsatz finden. Vor allem führen sie dort zu einem technischen Fortschritt, wo ein hohes mechanisches Niveau der Bauteile bei geringem spezifischen Gewicht und insgesamt ausgewogenen Eigenschaften von Bedeutung ist.

Die Erfindung wird durch die nachfolgenden Beispiele näher erläutert. Die in den Beispielen angegebenen Teile und Prozente beziehen sich, sofern nicht anders vermerkt, auf das Gewicht.

Beispiel 1

In einem Glasgefäß wurden 120 ml Acetonitril, 0,48 g der in der nachfolgenden Tabelle 1 spezifizierten Mischung aus Pyrrol und Furan und 0,39 g des Tributylammoniumsalzes des Hexafluorarsenats ($AsF_6^-$) vorgelegt. Nach Einbringen von zwei Platin-Elektroden von je 14 cm² Fläche im Abstand von 4 cm in die Lösung wurde unter Rühren mit einer Strommenge von 140 Amp s elektrolysiert. Hierbei schied sich auf der Anode ein schwarzer Film aus den Pyrrol/Furan-Copolymeren ab. Nach dem Spülen der beschichteten Anode mit Acetonitril und Trocknen bei 60 °C ließen sich die Filme vom Platin lösen. Die Eigenschaften der erhaltenen Copolymer-Filme sind ebenfalls in der Tabelle 1 zusammengefaßt.

Tabelle 1

| Versuch | Monomer-Gemische | | Reißfestigkeit N/mm² | Leitfähigkeit $\Omega^{-1}$ cm$^{-1}$ |
| --- | --- | --- | --- | --- |
| | Teile Pyrrol | Teile Furan | | |
| 1a | 0,4 | 0,08 | 55 | 85 |
| b | 0,38 | 0,1 | 60 | 90 |
| c | 0,30 | 0,18 | 65 | 92 |
| d | 0,24 | 0,24 | 72 | 102 |
| e | 0,20 | 0,28 | 75 | 105 |
| f | 0,10 | 0,38 | 63 | 87 |
| g | 0,01 | 0,47 | 60 | 84 |

Vergleichsbeispiel

Es wurde wie in Beispiel 1 beschrieben gearbeitet, jedoch anstelle der Monomeren-Mischung aus Pyrrol und Furan 0,48 g Pyrrol alleine eingesetzt. Es wurde ein Film mit folgenden Eigenschaften erhalten:

| Reißfestigkeit | 21 N/mm² |
| elektrische Leitfähigkeit | 50 $\Omega^{-1}$ cm$^{-1}$ |

## Beispiel 2

Es wurde gemäß Beispiel 1 gearbeitet, jedoch wurden diesmal 0,5 g Pyrrol und 0,2 g Thiadiazol und als Leitsalz 0,6 g des Tributylammonium-Perchlorats vorgelegt. Der erhaltene Film mit einer Schichtstärke von 58 μm hatte folgende Eigenschaften :

| Reißfestigkeit | 65 N/mm² |
| elektrische Leitfähigkeit | 53 $\Omega^{-1}$/cm$^{-1}$ |

## Beispiel 3

In einem Glasgefäß wurden 120 ml Acetonitril, 0,48 g Pyrrol und als Leitsalz 1,4 g 2-Nitrophenol und 1,85 g Tributylamin vorgelegt und gerührt. Unter gleichzeitigem Eindosieren von 0,6 g Thiophen wurde wie in Beispiel 1 angegeben elektrolysiert. Man erhielt einen Copolymer-Film (Schichtstärke 60 μm) mit einer Reißfestigkeit von 41 N/mm² und einer elektrischen Leitfähigkeit von 42 $\Omega^{-1}$ cm$^{-1}$.

## Beispiel 4

In einem Glasgefäß wurden 120 ml Acetonitril, 0,48 g Pyrrol, 0,2 g Thiadiazol, 0,2 g 3,5-Dimethylpyrazin und 1,5 g Tributylammonium-Sulfat sowie 0,93 Tributylamin vorgelegt und gerührt. Die Elektrolyse wurde wie in Beispiel 1 durchgeführt. Der erhaltene Copolymerfilm hatte eine Schichtstärke von 52 μm, eine Reißfestigkeit von 50 N/mm² und eine elektrische Leitfähigkeit von 55 $\Omega^{-1}$ cm$^{-1}$.

## Beispiel 5

Es wurde wie in Beispiel 1 gearbeitet, jedoch diesmal unter Argon 120 ml Acetonitril, 0,5 g Thiophen, 0,56 g 3,4-Dimethylpyrrol und 0,39 g des Tributylammoniumperchlorats vorgelegt. Als Anode diente dieses Mal ein Polypyrrolfilm. Die Elektrolyse wurde mit einer Strommenge von 80 Amp s durchgeführt. Man erhielt einen 60 μm dicken Film mit folgenden Eigenschaften :

| Reißfestigkeit | 45 N/mm² |
| elektrische Leitfähigkeit | 66 $\Omega^{-1}$ cm$^{-1}$. |

## Beispiel 6

In einem Glasgefäß wurden unter Argon 120 ml Acetonitril, 0,61 g 3,4-Dimethylpyrrol, 0,6 g Thiazol und 0,45 g des Tributylammonium-Hexafluorphosphat vorgelegt und gerührt. Als Anode diente ein p-leitender Polyacetylenfilm, der mit 10 % PF$_6^-$ dotiert war. Nach der Arbeitsweise gemäß Beispiel 1 wurde in einer Schichtstärke von 58 μm ein Film mit einer Reißfestigkeit von 30 N/mm² und einer elektrischen Leitfähigkeit von 34 $\Omega^{-1}$ cm$^{-1}$ erhalten.

## Beispiel 7

In einem Glasgefäß wurden 120 ml Acetonitril, 0,84 ml Wasser, 0,40 g Pyrrol, 0,08 g Thiophen und 0,8 g Tetramethylammoniumtetrafluorborat vorgelegt und gerührt. Als Anode diente diesmal ein p-leitender Polyacetylenfilm, der mit 15 % BF$_4^-$ dotiert war. Die Elektrolyse wurde mit einer Strommenge von 100 Amp s durchgeführt ; ansonsten wurde wie in Beispiel 1 gearbeitet. Der erhaltene Copolymerfilm (Schichtstärke 55 μm) besaß eine Reißfestigkeit von 33,0 N/mm² und eine elektrische Leitfähigkeit von 45 $\Omega^{-1}$ cm$^{-1}$.

## Beispiel 8

Es wurde wie in Beispiel 7 gearbeitet, diesmal jedoch als Anode ein p-leitendes Polyphenylen eingesetzt, daß mit 23 % AsF$_6^-$ dotiert war. Nach dem Aufpolymerisieren des Monomerengemisches aus Pyrrol und Thiophen betrug die Leitfähigkeit des Filmes 150 $\Omega^{-1}$ cm$^{-1}$.

## Beispiel 9

Es wurde wie in Beispiel 1 gearbeitet, diesmal jedoch den jeweiligen Monomer-Mischungen aus Pyrrol und Furan zusätzlich jeweils noch 0,5 g Terfuran zugefügt. Die Ergebnisse sind in Tabelle 2 zusammengefaßt. In allen Fällen wurden glatte Filme ohne jede Oberflächenrauhigkeit erhalten.

0 099 984

Tabelle 2

| Versuch | Monomer-Gemische | | | Reißfestigkeit $N/mm^2$ | Leitfähigkeit $\Omega^{-1} cm^{-1}$ |
|---------|------------------|------|---------|-------------------------|-------------------------|
| | Pyrrol (Teile) | Furan (Teile) | Terfuran (Teile) | | |
| 9 a | 0,4 | 0,08 | 0,5 | 85 | 86 |
| b | 0,38 | 0,1 | 0,5 | 83 | 82 |
| c | 0,30 | 0,18 | 0,5 | 92 | 95 |
| d | 0,24 | 0,24 | 0,5 | 84 | 150 |
| e | 0,20 | 0,28 | 0,5 | 92 | 140 |
| f | 0,10 | 0,38 | 0,5 | 90 | 105 |
| g | 0,01 | 0,47 | 0,5 | 85 | 110 |

## Beispiel 10

Es wurde gemäß Beispiel 1 gearbeitet, jedoch wurden diesmal 0,5 g Pyrrol und 0,2 g Hexathienyl und als Leitsalz 0,6 g des Tributylammonium-Perchlorats vorgelegt. Der erhaltene Film mit einer Schichtstärke von 60 μm hatte eine Reißfestigkeit von 97 $N/mm^2$, eine elektrische Leitfähigkeit von 84 $\Omega^{-1}$ $cm^{-1}$, war glatt und zeigte keinerlei Pusteln auf der Oberfläche.

## Beispiel 11

In einem Glasgefäß wurden 120 ml Acetonitril, 0,48 g Pyrrol und als Leitsalz 1,4 g 2-Nitrophenol und 1,85 g Tributylamin vorgelegt und gerührt. Unter gleichzeitigem Eindosieren von 0,6 g Cyclooctatetrafuran wurde wie in Beispiel 1 angegeben elektrolysiert. Man erhielt einen Copolymer-Film (Schichtstärke 65 μm) mit einer Reißfestigkeit von 50 $N/mm^2$ und einer elektrischen Leitfähigkeit von 45 $\Omega^{-1}$ $cm^{-1}$.

## Beispiel 12

In einem Glasgefäß wurden 120 ml Acetonitril, 0,48 g Pyrrol, 0,2 g Quaterfuran, 0,2 g 3,5-Dimethylpyrazin und 1,5 g Tributylammonium-Sulfat sowie 0,93 Tributylamin vorgelegt und gerührt. Die Elektrolyse wurde wie in Beispiel 1 durchgeführt. Der erhaltene Copolymerfilm hatte eine Schichtstärke von 55 μm, eine Reißfestigkeit von 65 $N/mm^2$ und eine elektrische Leitfähigkeit von 80 $\Omega^{-1}$ $cm^{-1}$.

## Beispiel 13

Es wurde wie in Beispiel 1 gearbeitet, jedoch diesmal unter Argon 120 ml Acetonitril, 0,6 g Bifuran, 0,36 g 3,4-Dimethylpyrrol und 0,49 g des Tributylamoniumperchlorats vorgelegt. Als Anode diente dieses Mal ein Polypyrrolfilm. Die Elektrolyse wurde mit einer Strommenge von 80 Amp s durchgeführt. Man erhielt einen 65 μm dicken Film mit folgenden Eigenschaften :

Reißfestigkeit 105 $N/mm^2$
elektrische Leitfähigkeit 74 $\Omega^{-1}$ $cm^{-1}$.

## Beispiel 14

In einem Glasgefäß wurden unter Argon 120 ml Acetonitril, 0,61 g 3,4-Dimethylpyrrol, 0,6 g Bisthiophen und 0,45 g des Tributylammonium-Hexafluorphosphat vorgelegt und gerührt. Als Anode diente ein p-leitender Polyacetylenfilm, der mit 10 % $PF_6^-$ dotiert war. Nach der Arbeitsweise gemäß Beispiel 1 wurde in einer Schichtstärke von 55 μm ein Film mit einer Reißfestigkeit von 45 $N/mm^2$ und einer elektrischen Leitfähigkeit von 50 $\Omega^{-1}$ $cm^{-1}$ erhalten.

## Beispiel 15

In einem Glasgefäß wurden 120 ml Acetonitril, 0,84 ml Wasser, 0,20 g Pyrrol, 0,28 g Quater (N-methylpyrrol), 0,08 g Thiophen und 0,8 g Tetramethylammoniumtetrafluorborat vorgelegt und gerührt. Als Anode diente diesmal ein p-leitender Polyacetylenfilm, der mit 23 % $AsF_6^-$ dotiert war. Die Elektrolyse wurde mit einer Strommenge von 100 Amp s durchgeführt ; ansonsten wurde wie in beispiel 1 gearbeitet.

7

Der erhaltene Copolymerfilm (Schichtstärke 55 μm) besaß eine Reißfestigkeit von 56 N/mm$^2$ und eine elektrische Leitfähigkeit von 180 $^{-1}$ cm$^{-1}$.

## Beispiel 16

In einem Glasgefäß wurden unter Argon 120 ml Acetonitril, 0,61 g 3,4-Dimethylpyrrol, 0,6 g Bisthiophen und 0,45 g des Tributylammonium-Hexafluorphosphat vorgelegt und gerührt. Als Anode diente ein p-leitender Polyacetylenfilm, der mit 10 % PF$_6^-$ dotiert war. Nach der Arbeitsweise gemäß Beispiel 1 wurde in einer Schichtstärke von 55 μm ein Film mit einer Reißfestigkeit von 45 N/mm$^2$ und einer elektrischen Leitfähigkeit von 50 $\Omega^{-1}$ cm$^{-1}$ erhalten.

## Beispiel 17

In einem Glasgefäß wurden 120 ml Acetonitril, 0,84 ml Wasser, 0,20 g Pyrrol, 0,28 g Quater (N-methylpyrrol), 0,08 g Thiophen und 0,8 g Tetramethylammoniumtetrafluorborat vorgelegt und gerührt. Als Anode diente diesmal ein p-leitender Polyacetylenfilm, der mit 23 % AsF$_6^-$ dotiert war. Die Elektrolyse wurde mit einer Strommenge von 100 Amp s durchgeführt ; ansonsten wurde wie in Beispiel 1 gearbeitet. Der erhaltene Copolymerfilm (Schichtstärke 55 μm) besaß eine Reißfestigkeit von 56 N/mm$^2$ und eine elektrische Leitfähigkeit von 180 $\Omega^{-1}$ cm$^{-1}$.

## Patentansprüche

1. Elektrisch leitfähige Komplexe aus Kationen der Copolymeren von Pyrrolen, die neben Einheiten aus Pyrrolen Comonomer-Einheiten aus anderen 5- und/oder 6-gliedrigen Heterocyclen mit einem konjugierten π-Elektronensystem eingebaut enthalten, und Gegenanionen.

2. Copolymeren-Komplexe nach Anspruch 1, dadurch gekennzeichnet, daß sie, bezogen auf das Copolymer, 20 bis 90 Gew.-% der Einheiten aus den Pyrrolen und 80 bis 10 Gew.-% der Einheiten aus den anderen Heterocyclen eingebaut enthalten.

3. Copolymeren-Komplexe nach Ansprüchen 1 bis 2, dadurch gekennzeichnet, daß sich die Einheiten aus Pyrrolen vom unsubstituierten Pyrrol selber und/oder von substituierten Pyrrolen ableiten.

4. Copolymeren-Komplexe nach Anspruch 3, dadurch gekennzeichnet, daß es sich bei den substituierten Pyrrolen um N-Alkylpyrrole, N-Arylpyrrole, an den C-Atomen substituierte Monoalkyl-, Dialkyl-, Monohalogen- und/oder Dihalogen-Pyrrole handelt.

5. Copolymeren-Komplexe nach Anspruch 3, dadurch gekennzeichnet, daß sich die Einheiten von Pyrrolen im wesentlichen vom unsubstituierten Pyrrol selber ableiten.

6. Copolymeren-Komplexe nach Anspruch 1, dadurch gekennzeichnet, daß es sich bei den Heterocyclen um Furan, Thiophen, Thiazol, Thiadiazol, Oxazol, Imidazol, Pyridin, Pyrimidin, Pyrazin und/oder alkylsubstituierte Derivate dieser Heterocyclen handelt.

7. Verfahren zur Herstellung der Copolymeren-Komplexe nach einem der Ansprüche 1 bis 6, dadurch gekennzeichnet, daß Pyrrole und/oder deren Di- oder Oligomere nacheinander oder zusammen mit anderen Heterocyclen, die ein konjugiertes π-Elektronensystem besitzen, und/oder deren Di- oder Oligomere durch anodische Oxidation in einem polaren Lösungsmittel und in Gegenwart von geeigneten Leitsalzen zu den Copolymeren umgesetzt werden.

8. Verfahren nach Anspruch 7, dadurch gekennzeichnet, daß Leitsalze mit einem Kation aus der Gruppe H$^+$, Li$^+$, Na$^+$, K$^+$, R$_4$N$^+$ und R$_4$P$^+$, worin die Reste R unabhängig voneinander Wasserstoff, Alkylreste, Cycloalkylreste oder Arylreste bedeuten, und einem Anion aus der Gruppe BF$_4^-$, AsF$_4^-$, AsF$_6^-$, SbF$_6^-$, SbCl$_6^-$, PF$_6^-$, ClO$_4^-$ HSO$_4^-$ und SO$_4^{2-}$ eingesetzt werden.

9. Verfahren nach Anspruch 7, dadurch gekennzeichnet, daß als Leitsalze Salze von Aromaten mit sauren Gruppen insbesondere von aromatischen Carbonsäuren oder aromatischen Sulfonsäuren eingesetzt werden.

10. Verfahren nach einem der Ansprüche 7 bis 9, dadurch gekennzeichnet, daß als Anode ein elektrisch leitfähiges Polymer eingesetzt wird, wobei die Pyrrole und die anderen Heterocyclen und/oder deren Di- oder Oligomere auf dieses elektrisch leitfähige Polymer aufpolymerisiert werden.

11. Verfahren nach Anspruch 10, dadurch gekennzeichnet, daß das elektrisch leitfähige Polymere ein p-dotiertes Polyacetylen, ein p-dotiertes Polyphenylen oder ein durch anodische Polymerisation hergestelltes Polypyrrol ist.

12. Verfahren nach einem der Ansprüche 7 bis 9, dadurch gekennzeichnet, daß man zunächst die Pyrrole und/oder deren Di- oder Oligomere anodisch polymerisiert und anschließend auf das erhaltene Polymere der Pyrrole die anderen Heterocyclen und/oder deren Di- oder Oligomere anodisch aufpolymerisiert.

## Claims

1. Electrically conductive complexes of cations of pyrrole copolymers which contain, in addition to pyrrole units, comonomer units of other 5- and/or 6-membered heterocyclic compounds having a conjugated π-electron system, and counter-anions.

2. Copolymer complexes as claimed in claim 1, which contain from 20 to 90 % by weight of pyrrole units and from 80 to 10 % by weight of units of the other heterocyclic compounds, the percentages being based on the copolymer.

3. Copolymer complexes as claimed in claim 1, wherein the pyrrole units are derived from unsubstituted and/or substituted pyrrole.

4. Copolymer complexes as claimed in claim 3, wherein the substituted pyrroles are N-alkylpyrroles or N-arylpyrroles, or are monoalkyl-, dialkyl-, monohalo- and/or dihalopyrroles substituted at the carbon atoms.

5. Copolymer complexes as claimed in claim 3, wherein the pyrrole units are essentially based on unsubstituted pyrrole.

6. Copolymer complexes as claimed in claim 1, wherein the heterocyclic compounds are furan, thiophene, thiazole, thiadiazole, oxazole, imidazole, pyridine, pyrimidine, pyrazine and/or alkyl-substituted derivatives thereof.

7. A process for the preparation of copolymer complexes as claimed in any of claims 1 to 6, wherein pyrroles and/or their dimers or oligomers, and other heterocyclic compounds having a conjugated π-electron system and/or their dimers or oligomers, are converted, either in succession or together, to the copolymers by anodic oxidation in a polar solvent and in the presence of a suitable conductive salt.

8. A process as claimed in claim 7, wherein the conductive salt used has a cation selected from the group consisting of $H^+$, $Li^+$, $Na^+$, $K^+$, $R_4N^+$ and $R_4P^+$, where the radicals R independently of one another are hydrogen, alkyl, cycloalkyl or aryl, and an anion selected from the group consisting of $BF_4^-$, $AsF_4^-$, $AsF_6^-$, $SbF_6^-$, $SbCl_6^-$, $PF_6^-$, $ClO_4^-$, $HSO_4^-$ and $SO_4^{2-}$.

9. A process as claimed in claim 7, wherein the conductive salt used is a salt of an aromatic possessing acidic groups, in particular a salt of an aromatic carboxylic acid or an aromatic sulfonic acid.

10. A process as claimed in any of claims 7 to 9, wherein the anode used is an electrically conductive polymer, the pyrroles and the other heterocyclic compounds and/or their dimers or oligomers being polymerized onto this electrically conductive polymer.

11. A process as claimed in claim 10, wherein the electrically conductive polymer is a p-doped polyacetylene, a p-doped polyphenylene, or a polypyrrole prepared by anodic polymerization.

12. A process as claimed in any of claims 7 to 9, wherein first the pyrroles and/or their dimers or oligomers are anodically polymerized, and then the other heterocyclic compounds and/or their dimers or oligomers are anodically polymerized onto the resulting pyrrole polymer.

## Revendications

1. Complexes conducteurs de l'électricité à base de cations de copolymères de pyrroles, dans lesquels sont copolymérisés, à côté d'unités pyrroliques, des unités comonomères d'autres composés hétérocycliques penta- et(ou) hexagonaux avec un système d'électrons π conjugués, et d'anions complémentaires.

2. Complexes de copolymères suivant la revendication 1, caractérisés en ce qu'ils comprennent, par rapport au copolymère, entre 20 et 90 % en poids d'unités pyrroliques et entre 80 et 10 % en poids d'unités des autres composés hétérocycliques.

3. Complexes de copolymères suivant les revendications 1 et 2, caractérisés en ce que les unités pyrroliques dérivent du pyrrole non substitué et(ou) de pyrroles substitués.

4. Complexes de copolymères suivant la revendication 3, caractérisés en ce que les pyrroles substitués sont choisis parmi les N-alkyl-pyrroles, les N-aryl-pyrroles et les monoalkyl-, dialkyl-, monohalo- et(ou) dihalo-pyrroles substitués sur les atomes de carbone.

5. Complexes de copolymères suivant la revendication 3, caractérisés en ce que les unités pyrroliques dérivent essentiellement du pyrrole non substitué.

6. Complexes de copolymères suivant la revendication 1, caractérisés en ce que les composés hétérocycliques sont choisis parmi le furanne, le thiophène, le thiazole, le thiadiazole, l'oxazole, l'imidazole, la pyridine, la pyrimidine et la pyrazine et(ou) les dérivés alkyl-substitués de ceux-ci.

7. Procédé de préparation de complexes de copolymères suivant l'une des revendications 1 à 6, caractérisé en ce que l'on soumet des pyrroles et(ou) des di- ou oligomères de ceux-ci simultanément ou successivement avec d'autres composés hétérocycliques contenant un système d'électrons π conjugués, et(ou) des di- ou oligomères de ceux-ci, à une oxydation anodique dans un solvant polaire en présence de sels conducteurs appropriés.

8. Procédé suivant la revendication 7, caractérisé en ce que les sels conducteurs sont choisis parmi les sels avec un cation choisi parmi $H^+$, $Li^+$, $Na^+$, $K^+$, $R_4N^+$ et $R_4P^+$, où les substituants R, qui peuvent être identiques ou différents, sont des atomes d'hydrogène ou des groupes alkyle, cycloalkyle ou aryle, et avec un anion choisi parmi $BF_4^-$, $AsF_4^-$, $AsF_6^-$, $SbF_6^-$, $SbCl_6^-$, $PF_6^-$, $ClO_4^-$, $HSO_4^-$ et $SO_4^{2-}$.

9. Procédé suivant la revendication 7, caractérisé en ce que l'on emploie comme sels conducteurs des sels de composés aromatiques avec des groupes acide, en particulier d'acides carboxyliques aromatiques et d'acides sulfoniques aromatiques.

9

10. Procédé suivant l'une des revendications 7 à 9, caractérisé en ce que l'on utilise comme anode un polymère conducteur de l'électricité, sur lequel les pyrroles et les autres composés hétérocycliques et(ou) leurs di- ou oligomères sont fixés par une copolymérisation.

11. Procédé suivant la revendication 10, caractérisé en ce que le polymère conducteur de l'électricité est un polyacétylène à dopage du type p, un polyphénylène à dopage du type p ou un polypyrrole préparé par une polymérisation anodique.

12. Procédé suivant l'une des revendications 7 à 9, caractérisé en ce que l'on procède d'abord à une polymérisation anodique des pyrroles et(ou) de leurs di- ou oligomères, puis on copolymérise ces polymères pyrroliques et les autres composés hétérocycliques et(ou) leurs di- ou oligomères par une polymérisation anodique.